# EUROPEAN PATENT APPLICATION

(11) **EP 4 397 409 A1**
(43) Date of publication of application: **10.07.2024**
(21) Application number: 22864360.7
(22) Date of filing: 24.08.2022
(51) Int. Cl.: B01J 41/14, B01D 61/46, B01D 71/82, B01J 47/12, C08J 5/22

(54) **ANION EXCHANGE MEMBRANE AND MANUFACTURING METHOD FOR SAME**

(30) Priority: 31.08.2021 JP 2021141359
(71) Applicant: Astom Corporation, Tokyo 105-0003 (JP); Tokuyama Corporation, Shunan-shi, Yamaguchi 745-8648 (JP)
(72) Inventor: MIZUGUCHI, Kazuo, Shunan-shi, Yamaguchi 745-8648 (JP); OHMURA, Nobuhiko, Shunan-shi, Yamaguchi 745-8648 (JP); KISHINO, Masayuki, Shunan-shi, Yamaguchi 745-8648 (JP); NAKATANI, Michihito, Shunan-shi, Yamaguchi 745-8648 (JP)
(74) Representative: Kraus & Lederer PartGmbB
(86) International application number: PCT/JP2022/031828
(87) International publication number: WO 2023/032776

(57) **Abstract**

The present invention provides an anion exchange membrane that has low electrical resistance when used in electrodialysis, is produced without an increase in cost, and is excellent in selective permeability to monovalent anions, and a method for producing the same. The anion exchange membrane has a tertiary amino group and a quaternary ammonium group as functional groups, such that an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups.

## Description

### Technical Field:

The present invention relates to an anion exchange membrane having tertiary amino groups and quaternary ammonium groups as functional groups such that the tertiary amino groups are present in a larger number than the quaternary ammonium groups on the surface of the membrane, and a method for producing the same.

### Background Art:

Ion exchange membranes are ion permselective membranes which are classified roughly into cation exchange membranes and anion exchange membranes. The structure of anion exchange membranes is such that positively charged exchange groups are fixed on the surface of the membranes, whereby anions are allowed to easily pass through the membranes, while cations are rejected by the positive charges and hardly pass through the membranes.

Known examples of the anion exchange membranes include an anion exchange membrane without a quaternary ammonium group as a functional group on its surface. This anion exchange membrane is known for its excellent selective permeability to monovalent anions such that the permeation of divalent sulfate ions (SO₄²⁻) is greatly reduced compared to that of monovalent chloride ions (Cl⁻) (see Patent Document 1).

However, this anion exchange membrane has high electrical resistance when used in electrodialysis for desalination and concentration of an electrolyte solution such as seawater. Thus, it is difficult to reduce the power consumption of electrodialyzer.

Another known example is a multilayer anion exchange membrane having a surface structure in which a first layer of tertiary amino groups as functional groups is provided on a backing material, and a second layer of quaternary ammonium groups as functional groups is provided on the first layer. This multilayer anion exchange membrane is also known for its excellent selective permeability to anions such that the permeation of divalent iron ions (Fe²⁺) is greatly reduced compared to that of divalent sulfate ions (SO₄²⁻), as well as excellent selective permeability to monovalent anions such that the permeation of divalent sulfate ions (SO₄²⁻) is greatly reduced compared to that of monovalent chloride ions (Cl-) (see Patent Document 2).

The multilayer anion exchange membrane is superior to each of the single-layer anion exchange membranes constituting the multilayer membrane in selective permeability to anions and monovalent anions. However, the multilayer anion exchange membrane requires a higher production cost than the single-layer anion exchange membranes, as there is need for forming the layers twice.

### Prior Art Documents:

### Patent Documents:

Patent Document 1: JP-B-48-034999
Patent Document 2: JP-A-3-115439

### Summary of the Invention:

### Problems to be solved by the Invention:

In view of the above-described circumstances, the present Invention has been accomplished and it is an object of the present invention to provide an anion exchange membrane that has low electrical resistance when used in electrodialysis, is low in production cost, and is excellent in selective permeability to monovalent anions, and a method for producing the same.

### Means for solving the Problems:

The present invention provides an anion exchange membrane having a tertiary amino group and a quaternary ammonium group as functional groups, such that an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups.

The intensity ratio of the tertiary amino group to the quaternary ammonium group is preferably 1.0 or more and 7.0 or less.

The intensity ratio of the tertiary amino group to the quaternary ammonium group is 1.0 or more preferably at a depth of 25 nm or less from the surface of the membrane.

The tertiary amino group is a preferably dimethylamino group.

The present invention provides a method for producing an anion exchange membrane having a tertiary amino group and a quaternary ammonium group as functional groups, such that an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups. The method includes:
(I) introducing a polymerizable composition for a raw film for ion exchange group introduction into a backing material;
(II) heating the backing material to polymerize the polymerizable composition, thereby producing the raw film for ion exchange group introduction;
(III) introducing the tertiary amino group into the raw film for ion exchange group introduction;
(IV) treating the raw film for ion exchange group introduction into which the tertiary amino group has been introduced with an alkaline aqueous solution at 50°C to 70°C; and
(V) introducing the quaternary ammonium group into the raw film for ion exchange group introduction treated with the alkaline aqueous solution.

The alkaline aqueous solution in (IV) preferably has a pH of 10 to 14 at 25°C.

The raw film is preferably treated with the alkaline aqueous solution for 4 to 24 hours in (IV).

X-ray photoelectron spectroscopy (hereinafter, referred to as "XPS") is a known technique or method for analyzing the chemical bonding state of elements present at a depth of a few nanometers from the top surface of a sample. In this context, the "surface" of the anion exchange membrane as used herein refers to a range from the top surface to a depth of a few nanometers. In the present invention, N1s spectra by using XPS were measured to analyze the chemical bonding state of nitrogen elements on the surface of the anion exchange membrane. The tertiary amino group and the quaternary ammonium group had peaks at 400.0 eV and 402.5 eV, respectively. The intensity ratio (= integrated intensity of tertiary amino group/integrated intensity of quaternary ammonium group) of the tertiary amino group to the quaternary ammonium group was calculated with the use of the integrated intensities of the respective peak areas obtained by waveform separation. When the intensity ratio is 1.0 or more, the anion exchange membrane, in which the tertiary amino group is introduced as a functional group, is effectively served. The intensity ratio is preferably 1.0 or more and 7.0 or less, more preferably 2.0 or more and 6.5 or less. If the intensity ratio is too high, the electrical resistance of the membrane becomes excessively high, although higher selectivity is achieved.

Further, XPS depth-profiling is also known as a technique for depth direction analysis of a sample by ion beam etching of a surface layer. For example, the membrane is ion etched to a certain depth, followed by the measurement of the N1s spectra. When the intensity ratio is less than 1.0, the tertiary amino group is present only in a smaller proportion than the quaternary ammonium group at this depth or deeper, which means that the tertiary amino group is not introduced. This analysis makes it possible to detect the thickness of the membrane where the tertiary amino group is introduced.

### Effect of the Invention:

The anion exchange membrane of the present invention, when used in electrodialysis, has low electrical resistance and, thus, can contribute to lower power consumption of electrodialyzer. In addition, the anion exchange membrane enables efficient desalination and concentration of an electrolyte solution with substantially no increase in production cost. Thus, desalination and concentration can be carried out in a shorter time, or alternatively a larger amount of electrolyte solution can be desalinated and concentrated, even if carried our in the same time. Furthermore, the anion exchange membrane can provide high ion selectivity, resulting in a concentrated solution with few impurities.

### Brief Description of the Drawings:

[Fig. 1] Fig. 1 shows a flowchart of important steps in treatment of the surface of an anion exchange membrane of the present invention. In Fig. 1, (a) shows the surface chemical structure of a raw film for ion exchange group introduction, and (b) shows the surface chemical structure of the anion exchange membrane of the present invention.
[Fig. 2] Fig. 2 shows XPS spectra obtained after treatment with an alkaline aqueous solution for varying time periods.
[Fig. 3] Fig. 3 shows XPS depth profiling spectra.
[Fig. 4] Fig. 4 shows XPS spectra before and after a step of introducing quaternary ammonium groups in Example 1.
[Fig. 5] Fig. 5 shows XPS spectra before and after the step of introducing quaternary ammonium groups in Comparative Example 1.

### Mode for Carrying out the Invention:

Hereinafter, preferred embodiments for carrying out the present invention will be described. Note that the present invention is not limited to the following description.

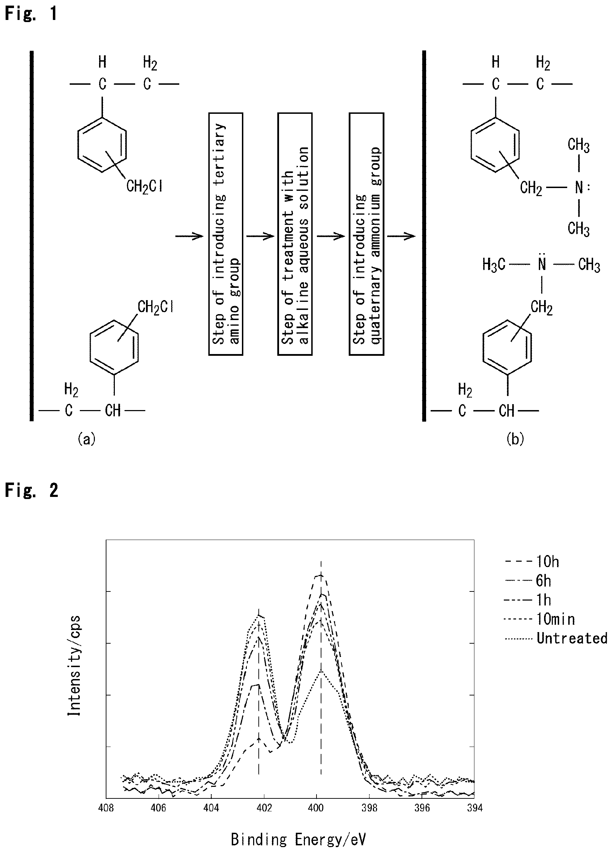

Fig. 1 shows a flowchart of important steps in treatment of the surface of an anion exchange membrane of the present invention. Fig. 1(a) shows the surface chemical structure of a raw film for ion exchange group introduction. Fig. 1(b) shows the surface chemical structure of the anion exchange membrane of the present invention. Chlorine in chloromethylstyrene present on the surface of the raw film is replaced by dimethylamine as a tertiary amino group. Although not shown in Fig. 1 (b), chlorine in chloromethylstyrene present in the depth direction from the surface is replaced by a quaternary ammonium group by the introduction of the tertiary amino group.

The raw film for ion exchange group introduction in Fig. 1(a) is produced by the following steps (I) and (II).

### < (I) Step of introducing polymerizable composition for raw film for ion exchange group introduction into backing material>

A polymerizable composition for the raw film for ion exchange group introduction is a polymerizable composition containing an aromatic polymerizable monomer having a halogenoalkyl group.

For the aromatic polymerizable monomer having a halogenoalkyl group, any known monomers can be used without limitation. The alkyl group preferably has a carbon number of 1 to 8, and the halogen atom as a substituent is chlorine, bromine, iodine or the like. Examples of the halogenoalkyl group include a chloromethyl group, a bromomethyl group, an iodomethyl group, a chloroethyl group, a bromoethyl group, an iodoethyl group, a chloropropyl group, a bromopropyl group, an iodopropyl group, a chlorobutyl group, a bromobutyl group, an iodobutyl group, a chloropentyl group, a bromopentyl group, an iodopentyl group, a chlorohexyl group, a bromohexyl group, and an iodohexyl group. Specific examples of the aromatic polymerizable monomer having the halogenoalkyl group include chloromethylstyrene, bromomethylstyrene, iodomethylstyrene, chloroethylstyrene, bromoethylstyrene, iodoethylstyrene, chloropropylstyrene, bromopropylstyrene, iodopropylstyrene, chlorobutylstyrene, bromobutylstyrene, iodobutylstyrene, chloropentylstyrene, bromopentylstyrene, iodopentylstyrene, chlorohexylstyrene, bromohexylstyrene, and iodohexylstyrene. Among them, chloromethylstyrene, bromomethylstyrene, iodomethylstyrene, chloroethylstyrene, bromoethylstyrene, iodoethylstyrene, chloropropylstyrene, bromopropylstyrene, iodopropylstyrene, chlorobutylstyrene, bromobutylstyrene, and iodobutylstyrene are particularly preferred.

The raw film for anion exchange group introduction obtained by polymerizing the polymerizable composition has a halogenoalkyl group derived from the aromatic polymerizable monomer having the halogenoalkyl group. This halogenoalkyl group is converted to an anion exchange group, that is, a tertiary amino group or a quaternary ammonium group, as described later. The tertiary amino group is a weakly basic group, and the quaternary ammonium group is a strongly basic group; both of them are highly excellent anion exchange groups. When other anion exchange groups are also desired, the polymerizable composition may also contain polymerizable monomers having other anion exchange groups or having functional groups capable of introducing other anion exchange groups, in addition to the aromatic polymerizable monomer having the halogenoalkyl group. Such anion exchange groups other than the tertiary amino group or the quaternary ammonium group are not particularly limited as long as they are functional groups that can be negatively or positively charged in an aqueous solution. Examples include a primary or secondary amino group, a pyridyl group, an imidazole group, and a quaternary pyridinium group. The aromatic polymerizable monomer having the halogenoalkyl group is preferably contained in an amount of 30 to 98 parts by mass, more preferably 50 to 95 parts by mass, with respect to 100 parts by mass of the polymerizable monomer component in the polymerizable composition.

In order to achieve the anion exchange membrane with higher strength by increasing its density, the polymerizable composition preferably contains a crosslinkable polymerizable monomer. For the crosslinkable polymerizable monomer, any conventionally known monomers for use in the production of ion exchange membranes can be used without particular limitation. Specific examples include m-, p- or o-divinylbenzene, divinylbiphenyl, divinylsulfone, butadiene, chloroprene, isoprene, trivinylbenzene, divinylnaphthalene, diallylamine, triallylamine, divinylpyridine, and other vinylbenzyl-based functional compounds having three or more vinylbenzyl groups as disclosed in JP-A-62-205153 and the like.

When the crosslinkable polymerizable monomer is contained in a large amount relative to the aromatic polymerizable monomer having the halogenoalkyl group, it not only reduces the ion exchange capacity of the anion exchange membrane, but it increases the resistance of the membrane due to an excessively high degree of crosslinking, which possibly results in an increase in electric power consumption rate. When, on the contrary, the crosslinkable polymerizable monomer is contained in an excessively small amount, it reduces the strength of the membrane. In addition, since the layer on the membrane surface containing the tertiary amino groups has a different degree of crosslinking, the swelling rate varies too significantly in a moisture state, which may cause the membrane to be greatly warped with the layer containing the tertiary amino groups facing inward, resulting in handling difficulty. In light of the foregoing, the crosslinkable polymerizable monomer is preferably contained in an amount of 3 to 40 parts by mass, suitably 5 to 30 parts by mass, and more suitably 7 to 15 parts by mass, with respect to 100 parts by mass of the polymerizable monomer component of the sum of the aromatic polymerizable monomer having the halogenoalkyl group and the above-described other polymerizable monomers used in combination as needed.

In addition to the aromatic polymerizable monomer having the halogenoalkyl group and the crosslinkable polymerizable monomer, other monomers can be used as needed. Specific examples include styrene, vinyltoluene, vinylxylene, ethylvinylbenzene, α-methylstyrene, vinylnaphthalene, acrylonitrile, acrolein, and methyl vinyl ketone.

The polymerizable composition usually contains a polymerization initiator. For the polymerization initiator, any conventionally known initiators may be used without particular limitation and appropriately selected in view of the backing material to be used, the formation conditions, and the like. Specific suitable examples include p-menthane hydroperoxide, diisopropyl benzene hydroperoxide, α,α'-bis(tert-butylperoxy-m-isopropyl)benzene, di-tert-butyl peroxide, tert-butyl hydroperoxide, di-tert-amyl peroxide, tert-butyl cumyl peroxide, dicumyl peroxide, 2,5-dimethyl-2,5-di(tert-butylperoxy)hexane, 2,5-dimethyl-2,5-di(tert-butylperoxy)hexine-3, cumene hydroperoxide, 1,1,3,3-tetramethylbutyl hydroperoxide, 2,5-dimethyl-2,5-dihydroperoxyhexane, 2,5-dimethyl-2,5-dihydroperoxyhexine-3, benzoyl peroxide, methyl ethyl ketone peroxide, methyl isobutyl ketone peroxide, cyclohexane peroxide, methylcyclohexane peroxide, isobutyl peroxide, 2,4-dichlorobenzoyl peroxide, o-methylbenzoyl peroxide, bis-3,5,5-trimethylhexanoyl peroxide, lauroyl peroxide, p-chlorobenzoyl peroxide, 1,1-di-tert-butylperoxy trimethylcyclohexane, 1,1-di-tert-butylperoxy cyclohexane, 2,2-di-(tert-butylperoxy)-butane, 4,4-di-tert-butylperoxy valerate-n-butyl ester, 2,4,4-trimethylpentyl peroxyphenoxyacetate, α-cumyl peroxyneodecanoate, tert-butyl peroxyneodecanoate, tert-butyl peroxypivalate, tert-butylperoxy-2-ethylhexanoate, tert-butylperoxy-isobutyrate, di-tert-butylperoxy-hexahydroterephthalate, di-tert-butyl peroxyazelate, tert-butylperoxy-3,5,5-trimethylhexanoate, tert-butyl peroxyacetate, and tert-butyl peroxybenzoate. Each of these initiators, which is used alone or in combination with one or more of the initiators, is added to and mixed with a monomer paste.

Usually, the polymerization initiator is suitably used in an amount of 0.1 to 30 parts by mass, more suitably 1 to 10 parts by mass, with respect to 100 parts by mass of the above-described polymerizable monomer component.

The polymerizable composition may further contain matrix resin as a viscosity modifier. The polymerizable composition containing matrix resin has higher coating properties, so as to prevent from dripping at the time of applying it to a highly porous backing material.

Examples of the matrix resin include saturated aliphatic hydrocarbon-based polymers such as polyvinyl chloride, chlorinated polyvinyl chloride, an ethylene-vinyl chloride copolymer, a vinyl chloride-based elastomer, chlorinated polyethylene, chlorosulfonated polyethylene, an ethylene-propylene copolymer, and polybutylene; styrene-based polymers such as a styrene-butadiene copolymer; and copolymers obtained by the copolymerization of any of these polymers with a styrene-based monomer such as vinyltoluene, vinylxylene, chlorostyrene, chloromethylstyrene, α-methylstyrene, α-halogenated styrene, or α,β,β'-trihalogenated styrene, a monoolefin such as ethylene or butylene, or a conjugated diolefin such as butadiene or isoprene. Suitable examples further include styrene-butadiene rubber and hydrogenated rubber thereof, nitrile rubber and hydrogenated nitrile rubber thereof, pyridine rubber and hydrogenated rubber thereof, and a styrenic thermoplastic elastomer.

The styrenic thermoplastic elastomer is a block copolymer, comprising one or two polymers selected from polyethylene, polybutadiene, polyisoprene, vinyl polyisoprene, a copolymer of ethylene and butylene, or a copolymer of ethylene and propylene, between two polystyrene. Examples include a polystyrene-hydrogenated polybutadiene-polystyrene copolymer, a polystyrene-(polyethylene/butylene rubber)-polystyrene copolymer, a polystyrene-hydrogenated polyisoprene rubber-polystyrene copolymer, a polystyrene-(polyethylene/propylene rubber)-polystyrene copolymer, a polystyrene-polyethylene-(polyethylene/propylene rubber)-polystyrene copolymer, and a polystyrene-vinyl polyisoprene-polystyrene copolymer. The molecular weight of the matrix resin is not particularly limited, but is usually preferably in a range of 1,000 to 1, 000, 000, particularly 50, 000 to 500,000.

The content of the matrix resin in the polymerizable composition is determined according to the molecular wight so that appropriate viscosity can be ensured. For example, the content of the matrix resin is preferably 1 to 50 parts by mass, more preferably 3 to 15 parts by mass, with respect to 100 parts by mass of the above-described polymerizable monomer component.

As necessary, the polymerizable composition may also contain, in addition to the above-described various components, a plasticizer such as dioctyl phthalate, dibutyl phthalate, tributyl phosphate, or alcohol ester of fatty acid or aromatic acid; an organic solvent; and the like.

Further, it is also suitable for the polymerizable composition to contain a compound having one or more epoxy groups such as styrene oxide or diethylene glycol diglycidyl ether, so as to capture halogen gas or hydrogen halide gas generated by thermal decomposition of the aromatic polymerizable monomer having the halogenoalkyl group.

The polymerizable composition containing the above-described components is introduced into voids of the backing material and then polymerized, thereby providing a raw film for anion exchange group introduction. For the backing material, any known backing materials for use in the production of ion exchange membranes may be used. Usually, a support material having a porosity of 20% to 90%, preferably 40% to 80%, and more preferably 45% to 55% is uese for the backing material. Examples include a woven fabric, a nonwoven fabric, a porous film, and a mesh-like article made of polyvinyl chloride, polyolefin, or the like. Among them, a porous film is particularly preferred because it can impart monovalent anion selectivity without extremely increasing membrane resistance. The average pore size of a porous film is preferably 0.05 to 0.20 um in view of the balance between the expansion/contraction and resistance of the ion exchange membrane. The thickness of the backing material usually ranges from 5 to 300 um, and is preferably 70 to 250 um in view of membrane resistance, strength retention and the like.

The method of introducing the polymerizable composition into the backing material is not particularly limited. For example, the polymerizable composition is applied or sprayed to the backing material, or alternatively the backing material is immersed in the polymerizable composition. When the polymerizable composition is in a paste form, it is preferably introduced by being applied. The polymerizable composition can be applied to the backing material by using a known means such as a roll coater, a flow coater, a knife coater, a comma coater, a spray process, or a dipping process.

### < (II) Step of heating the backing material and polymerizing the polymerizable composition to produce raw film for ion exchange group introduction>

After the polymerizable composition is introduced into the backing material as described above, the backing material is laminated with a release material having mold releasability to avoid adhesion to another backing material and is wound around a roller, followed by heating for polymerization.

The release material, which is heat resistant enough to withstand polymerization and is able to be peeled off easily after polymerization, is used. Examples include films made of: polyolefin such as polypropylene, poly1-butene, poly4-methyl-1-pentene, or a random or block copolymer of α-olefins such as ethylene, propylene, 1-butene, and 4-methyl-1-penten; an ethylene-vinyl compound copolymer such as an ethylene-vinyl acetate copolymer, an ethylene-vinyl alcohol copolymer, or an ethylene-vinyl chloride copolymer; a polyvinyl compound such as polymethyl acrylate or polymethyl methacrylate; polyamide such as nylon 6, nylon 6-6, nylon 6-10, nylon 11, or nylon 12; thermoplastic polyester such as polyethylene terephthalate, polybutylene terephthalate, or polyethylene naphthalate; polycarbonate; polyphenylene oxide; biodegradable resin such as polylactic acid; or any of resins as mixtures thereof. These films may be biaxially stretched.

The release material may be selected appropriately from the films listed above according to the type of the monomer component in the polymerizable composition. Above all, a polyester film such as a polyethylene terephthalate (PET) film is most suitable from the viewpoint of heat resistance and mold releasability.

Polymerization may be carried out under normal pressure or increased pressure, which may be usually approximately 0.1 to 1.0 MPa.

The polymerization temperature may be lower than the melting point of the backing material, but is usually preferably in a range of 40°C to 130°C. By heating the polymerizable composition to this temperature range for polymerization, a part of the backing material is allowed to be dissolved in the polymerizable composition during polymerization. As a result, the ion exchange resin and the backing material can be bonded together with increased strength, resulting in a further improvement in membrane strength and current efficiency.

The polymerization time varies depending on the polymerization temperature and the like, but is usually approximately 3 to 20 hours.

### <(III) Step of introducing tertiary amino group into raw film for ion exchange group introduction>

Fig. 1 (a) shows an example of the raw film for ion exchange group introduction, in which chloromethyl styrene is used as the aromatic polymerizable monomer having the halogenoalkyl group. Tertiary amino groups as ion exchange groups are introduced into the raw film for ion exchange group introduction by using a secondary amine compound (Step of introducing tertiary amino group). Examples of the secondary amine compound include dimethylamine, diethylamine, dipropylamine, dibutylamine, and diethanolamine. Dimethylamine is preferred, as short substituents are preferable considering the balance between resistance and monovalent anion selectivity.

The raw film for ion exchange group introduction is brought into contact with an aqueous solution of the secondary amine compound, so that tertiary amino groups are introduced into the raw film. As a result, the halogenoalkyl groups on the surface of the raw film for ion exchange group introduction are not only replaced by the tertiary amino groups, but also partially crosslinked. In a case where the secondary amine compound in the aqueous solution is too slow to diffuse into the raw film or is poorly dissolved, the water may be partially replaced by an organic solvent so as to adjust diffusion rate and improve dissolubility. Examples of such an organic solvent to replace the water include hydrophilic solvents such as methanol, ethanol, 1-propanol, 2-propanol, and acetone. The content of the solvent is preferably within 30% by mass, particularly 5% to 15% by mass, of the water.

When the secondary amine compound is dissolved in water for the reaction, the concentration of the secondary amine compound is preferably 0.01 to 2 mol/L, particularly 0.03 to 1 mol/L. If the concentration is too low, substitution reactivity with the halogenoalkyl groups decreases. If the concentration is too high, the compound strongly diffuses into the raw film for anion exchange group introduction, so that the substitution reaction is likely to occur deep within the film.

The reaction temperature at which the tertiary amino groups are introduced is 20°C to 50°C, and the reaction time is 1 to 24 hours. If the reaction temperature is less than 20 °C, and/or the reaction time is less than 1 hour, the halogenoalkyl groups cannot be fully replaced by the tertiary amino groups. If the reaction temperature exceeds 50°C, and/or the reaction time exceeds 24 hours, the compound strongly diffuses into the raw film for anion exchange group introduction, so that the substitution reaction is likely to occur deep within the film. The raw film for anion exchange group introduction, after reacted with the secondary amine compound, may be washed for the purpose of removing the excess secondary amine compound that has failed to undergo the reaction.

### <(IV) Step of treating raw film for ion exchange group introduction into which tertiary amino group has been introduced with alkaline aqueous solution at 50°C to 70°C>

As shown in Fig. 1, the step of introducing tertiary amino groups is followed by a treatment with an alkaline aqueous solution (Step of treatment with alkaline aqueous solution). This step increases the amount of the tertiary amino groups on the surface of the raw film for ion exchange group introduction. Although details are still unknown, the following reaction is presumed to occur: The partially crosslinked structure formed in the step of introducing tertiary amino groups is hydrolyzed without causing the tertiary amino groups to be liberated from the surface, and the crosslinked structure is broken at one end and then disappears, which causes the tertiary amino groups to increase. As such, most of the halogenoalkyl groups on the surface of the raw film for ion exchange group introduction are replaced by the tertiary amino groups.

For the alkaline aqueous solution, any known aqueous solutions can be used, such as an aqueous sodium hydroxide solution, an aqueous potassium hydroxide solution, an aqueous barium hydroxide solution, and aqueous ammonia. For the sake of efficiency in the treatment, a strongly basic aqueous solution of sodium hydroxide or potassium hydroxide is preferred.

The alkaline aqueous solution may have a pH of 8 to 14 at 25°C, but preferably has a pH of 10 to 14 at 25°C for the sake of efficiency in the treatment. The treatment temperature is preferably 50°C to 70°C, more preferably 55°C to 65°C. If the temperature is less than 50°C, the treatment takes a longer time, resulting in low productivity. If the temperature exceeds 70°C, the treatment becomes severe, which may cause the tertiary amino groups to be liberated.

The treatment time with the alkaline aqueous solution in Step (IV) may be 4 to 24 hours, but is preferably 6 to 12 hours, more preferably 6 to 10 hours. If the time is less than 4 hours, the treatment may be insufficient. If the time exceeds 24 hours, the treatment becomes severe, resulting in an increase in electrical resistance.

### < (V) Step of introducing quaternary ammonium group into raw film for ion exchange group introduction treated with alkaline aqueous solution>

As shown in Fig. 1, quaternary ammonium groups are introduced into the halogenoalkyl groups remaining in the raw film for ion exchange group introduction treated with the alkaline aqueous solution, by using a tertiary amine compound (Step of introducing quaternary ammonium group). Examples of the tertiary amine compound include trimethylamine, triethylamine, N,N-dimethylpropylamine, and N-ethyl-N-methylbutylamine. From the viewpoint of resistance, trimethylamine is preferred.

The raw film for ion exchange group introduction is brought into contact with an aqueous solution of the tertiary amine compound, so that quaternary ammonium groups are introduced into the raw film. As a result, the halogenoalkyl groups remaining in the film below the surface are replaced, with no influence on the surface of the film where the tertiary amino groups have already been in place. The introduction of quaternary ammonium groups may be carried out by a routine method for use in the production of anion exchange membranes.

By the above-described method, the anion exchange membrane of the present invention with the surface as described in Fig. 1(b) can be produced. Despite the fact that the anion exchange membrane of the present invention is composed of multiple layers including a layer with tertiary amino groups and a layer with quaternary ammonium groups, this membrane can be produced at low cost, as there is no need to form the respective layers.

### <Anion exchange membrane of the present invention>

By the above-described method for producing an anion exchange membrane according to the present invention, it is possible to provide an anion exchange membrane having a tertiary amino group and a quaternary ammonium group as functional groups, such that an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups.

Further, the anion exchange membrane of the present invention has an electric resistance of 1.5 Ω·cm² or more and 3.0 Ω·cm² or less, preferably 1.8 Ω·cm² or more and 2.5 Ω·cm² or less, and more preferably 2.1 Ω·cm² or more and 2.4 Ω·cm² or less. In a seawater concentration test, the concentration of chloride ions (Cl⁻) is 3.2 mol/L or more, preferably 3.8 mol/L or more, and the concentration of sulfate ions (SO₄²⁻) is 20×10⁻³ N or less, preferably 15×10⁻³ N or less.

That is, the anion exchange membrane of the present invention has high selectivity because it has a surface layer containing tertiary amino groups, and has low electrical resistance because the surface layer containing tertiary amino groups is extremely thin.

### Examples:

Hereinafter, the present invention will be described in detail by way of Examples; however, the present invention is not limited to these Examples.

### (Example 1)

A paste-like polymerizable composition was obtained by mixing 85 parts by mass of chloromethylstyrene, 5.7 parts by mass of divinylbenzene, 4.3 parts by mass of ethylvinylbenzene, 4 parts by mass of di-tert-butyl peroxide as a radical polymerization initiator, and 3 parts by mass of styrene oxide as a hydrogen chloride gas scavenger.

Then, the thus-obtained polymerizable composition was applied to a biaxially stretched porous film of polyethylene (thickness: 100 um; porosity: 46%; average pore size: 0.13 um) as a backing material, so that the polymerizable composition was introduced into the backing material.

Thereafter, the backing material into which the polymerizable composition had been introduced was coated on both surfaces with a release material comprised of a polyester film, and wound around a roller, followed by polymerization. The polymerization temperature pattern was such that the temperature was raised from 20°C to 50°C over 30 minutes, maintained at 50°C for 20 minutes, raised to 130°C over 80 minutes, and maintained at 130°C for 4 hours. As a result, a raw film for anion exchange group introduction was produced.

After that, the release film was peeled off from the raw film for anion exchange group introduction. At this time, the release material was not peeled off completely from both surfaces, but was left coating on one surface of the raw film. The raw film for anion exchange group introduction coated only on one side with the release material was immersed in an aqueous solution of dimethylamine (0.05 mol/L) for 8 hours at 34°C, so that chlorine in chloromethyl groups on the uncoated surface was replaced by dimethylamine. In this manner, tertiary amino groups were introduced into the raw film. Then, the raw film into which the tertiary amino groups had been introduced was washed with an aqueous solution of hydrochloric acid (1.0 mol/L) and pure water.

Then, the polyester film coating one surface was removed. The raw film for anion exchange group introduction was wound again around a roller, and treated with an alkaline aqueous solution by being immersed in an aqueous solution of sodium hydroxide (0.01 mol/L) for 10 hours at 60°C. Thereafter, the raw film treated with the alkaline aqueous solution was washed with pure water.

Next, the raw film was subjected to a quaternarization reaction for 16 hours at 30°C by using an aqueous solution containing 5% by mass of trimethylamine and 25% by mass of acetone, so that chlorine in the chloromethyl groups remaining in the film was replaced by trimethylamine. In this manner, quaternary ammonium groups were introduced into the raw film. Then, the raw film into which the quaternary ammonium groups had been introduced was washed with an aqueous solution of hydrochloric acid (1.0 mol/L) and pure water.

### (Examples 2 to 4 and Comparative Example 1)

Anion exchange membranes were produced in the same manner as in Example 1, except that the treatment time with the alkaline aqueous solution in Example 1 was changed to 0 minutes (untreated), 10 minutes, 1 hour, and 6 hours and the produced menbranes were used for Comparative Example 1, Example 2, Example 3, and Example 4, respectively.

Fig. 2 shows N1s spectra (hereinafter, referred to as "XPS spectra") measured by X-ray photoelectron spectroscopy (XPS) on the surface of the anion exchange membranes in Examples 1 to 4 and Comparative Example 1 in which the treatment time with the alkaline aqueous solution varies. XPS was measured by "PHI5000 VersaProbe III", an XPS instrument manufactured by ULVAC-PHI, Inc. The XPS instrument used a monochromatic Al-Kα line as X-ray source, and the photoelectron take-off angle was 45°.

In the XPS spectra, the peaks at 400 eV and 402.5 eV are attributed to the tertiary amino groups and the quaternary ammonium groups, respectively, and the intensities of the respective peaks are represented by integrated peak areas. The longer the treatment time with the alkaline aqueous solution, the higher the intensities around 400 eV attributed to the tertiary amino groups, and the lower the intensities around 402.5 eV attributed to the quaternary ammonium groups. In Example 2 in which the treatment time with the alkaline aqueous solution was 10 minutes, the intensity ratio was 1.0 or more. The treatment time with the alkaline aqueous solution in Examples 4 and 1 was the same as that in Examples 6 and 8, respectively, as described below. As shown in Table 1, the intensity ratio was 3.8 in Example 4 (Example 6) and 6.5 in Example 1 (Example 8) . In Comparative Example 1 in which the film was not treated with the alkaline aqueous solution, the intensity ratio was 0.4.

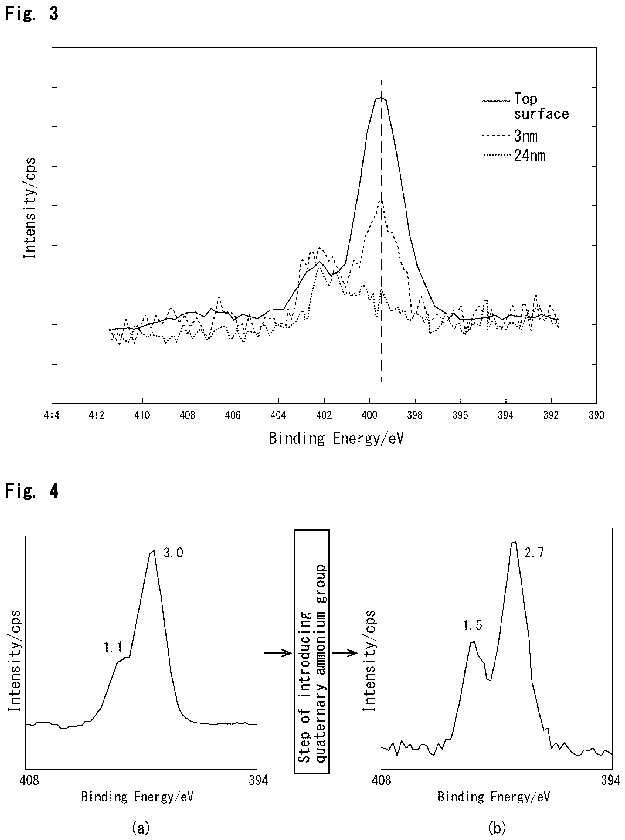

Fig. 3 shows XPS depth profiling spectra of the anion exchange membrane in Example 1 on its unetched top surface and at etch depths of 3 nm and 24 nm. XPS was measured by "ESCALAB220iXL", an XPS instrument manufactured by Thermo Fisher Scientific Inc. The XPS instrument used a monochromatic Al-Kα line as X-ray source, and the photoelectron take-off angle was 90°. Ion etching was performed by using an Ar gas cluster ion beam, and the etching rate was 2.7 nm/min (for LDPE) . The intensity ratio of the tertiary amino groups to the quaternary ammonium groups on the top surface and at an etch depth of 3 nm was more than 1.0, while the intensity ratio of the tertiary amino groups to the quaternary ammonium groups at an etch depth of 24 nm was less than 1.0. This clarifies that few tertiary amino groups were introduced to a depth of 24 nm or more from the top surface of the anion exchange membrane in Example 1.

Fig. 4 shows a change in XPS spectra on the surface of an anion exchange membrane in Example 5 to be described later before and after the step of introducing quaternary ammonium groups; each value represents the integrated peak area intensity. The intensity ratio of the tertiary amino groups to the quaternary ammonium groups before the introduction of the quaternary ammonium groups was 2. 7 (3.0/1.1 = 2. 7) as shown in Fig. 4 (a), while the intensity ratio after the introduction of the quaternary ammonium groups was 1.8 (2.7/1.5 = 1.8) as shown in Fig. 4(b). Accordingly, by the step of introducing quaternary ammonium groups, the quaternary ammonium groups were partially introduced into the surface of the anion exchange membrane in Example 5, but it seems unlikely that the tertiary amino groups were replaced by the quaternary ammonium groups in large numbers.

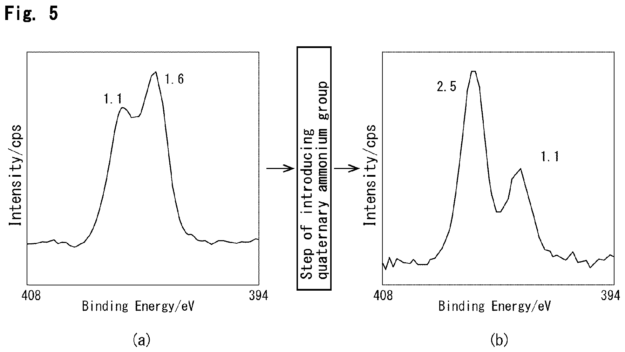

Fig. 5 shows a change in XPS spectra on the surface of the anion exchange membrane in Comparative Example 1 before and after the step of introducing quaternary ammonium groups; each value represents the integrated peak area intensity. The intensity ratio of the tertiary amino groups to the quaternary ammonium groups before the introduction of the quaternary ammonium groups was 1.5 (1.6/1.1 = 1.5) as shown in Fig. 5(a), while the intensity ratio after the introduction of the quaternary ammonium groups was 0.4 (1.1/2.5 = 0. 4) as shown in Fig. 5(b). This clarifies that when the film was not treated with the alkaline aqueous solution, most of the tertiary amino groups were replaced by the quaternary ammonium groups.

### (Examples 5 to 11 and Comparative Example 1)

Anion exchange membranes were produced in the same manner as in Example 1, except that the treatment time with the alkaline aqueous solution in Example 1 was changed to 0 minutes (untreated), 4 hours, 6 hours, 8 hours, 10 hours, 12 hours, 16 hours, and 24 hours and the menbranes were used for Comparative Example 1, Example 5, Example 6 (as in Example 4), Example 7, Example 8 (as in Example 1), Example 9, Example 10, and Example 11, respectively.

The anion exchange membranes in Examples 5 to 11 and Comparative Example 1 were subjected to an electrical resistance test and a seawater concentration test as described below.

### <Electrical resistance test>

The ion exchange membrane was sandwiched in the middle of a two-compartment cell with platinum black electrodes, and the cell was filled with an aqueous solution of NaCl (0.5 mol/L) on both sides of the ion exchange membrane. The resistance between the electrodes at 25°C was measured by an alternating current bridge (frequency: 1000 cycles/sec) and compared with that observed in the absence of the ion exchange membrane. From the resistance difference, the membrane resistance (Ω·cm²) was determined. The ion exchange membrane used for the measurement was previously equilibrated with an aqueous solution of NaCl (0.5 mol/L).

### <Seawater concentration test>

A small electrodialyzer (conductive membrane area: 100 cm²) was equipped with the anion exchange membrane as a sample in combination with a cation exchange membrane, CIMS (manufactured by ASTOM Corporation), such that the surface of the anion exchange membrane into which the tertiary amino groups and the like had been introduced faced a desalination compartment. The operating conditions were as follows: Seawater at 25°C was allowed to flow into the desalination compartment at a flow rate of 6 cm/sec, while a concentration compartment was filled with an aqueous solution of NaCl (3.5 mol/L), followed by electrodialysis at a current density of 3 A/dm² for five hours or more (until there was no concentration change in the concentration compartment). Then, the concentrations of chloride ions (Cl-) and sulfate ions (SO₄²⁻) in the concentration compartment were measured.

Table 1 shows the results of the electrical resistance test and the seawater concentration test on the anion exchange membranes in Examples 5 to 11 and Comparative Example 1 in which the treatment time with the alkaline aqueous solution varies. The table also shows the intensity ratio of the tertiary amino groups to the quaternary ammonium groups.

When the treatment time with the alkaline aqueous solution was 4 to 24 hours (Examples 5 to 11), the electrical resistance was 2.0 to 2.6 (Ω·cm²), which was roughly equal to 2.0 (Ω·cm²) in Comparative Example 1. Although not shown in Table 1, as the treatment time increased further, the electrical resistance became higher.

In the concentration test using seawater, when the treatment time with the alkaline aqueous solution was 4 to 24 hours (Examples 5 to 11), the concentration of monovalent chloride ions (Cl-) was 3.78 to 3.85 (mol/L), which was roughly equal to 3.70 (mol/L) in Comparative Example 1. As such, the concentration of chloride ions scarcely varied according to the treatment time. Regarding the concentration of divalent sulfate ions (SO₄²⁻), even when the treatment time with the alkaline aqueous solution was only 4 hours (Example 5), it was decreased to 43% of that in Comparative Example 1 (16.3/38.3 = 0.43) . As the treatment time increased, the concentration of sulfate ions was decreased further to 14% (5.5/38.3 = 0.14) when the treatment time was 16 hours (Example 10) and to 13% (5.0/38.3 = 0.13) when the treatment time was 24 hours (Example 11) . The concentration of sulfate ions became almost constant after 24 hours of treatment.

This clarifies that when the treatment time with the alkaline aqueous solution was 4 to 24 hours, the anion exchange membrane of the present invention had excellent selective permeability to monovalent anions such that the permeation of divalent sulfate ions (SO₄²⁻) was greatly reduced compared to that of monovalent chloride ions (Cl-).

**[Table 1]**

| Results of electrical resistance test and seawater concentration test after treatment with alkaline aqueous solution for varying time periods | | | | | |
|---|---|---|---|---|---|
| | Treatment with alkaline aqueous solution (hour) | Electrical resistance (Ω·cm²) | Tertiary amino group / quaternary ammonium group intensity ratio | Concentration of chloride ion (mol/L) | Concentration of sulfate ion (×10⁻³ N) |
| Comparative Example 1 | 0 | 2.0 | 0.4 | 3.70 | 38.3 |
| Example 5 | 4 | 2.1 | 1.8 | 3.78 | 16.3 |
| Example 6 | 6 | 2.2 | 3.8 | 3.83 | 12.7 |
| Example 7 | 8 | 2.2 | 4.5 | 3.85 | 11.5 |
| Example 8 | 10 | 2.3 | 6.5 | 3.81 | 9.1 |
| Example 9 | 12 | 2.3 | 6.8 | 3.81 | 6.3 |
| Example 10 | 16 | 2.5 | 7.4 | 3.82 | 5.5 |
| Example 11 | 24 | 2.6 | 11.3 | 3.82 | 5.0 |

## Claims

1. An anion exchange membrane having a tertiary amino group and a quaternary ammonium group as functional groups, wherein an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups.

2. The anion exchange membrane according to claim 1, wherein the intensity ratio of the tertiary amino group to the quaternary ammonium group is 1.0 or more and 7.0 or less.

3. The anion exchange membrane according to claim 1 or 2, wherein the intensity ratio of the tertiary amino group to the quaternary ammonium group is 1.0 or more at a depth of 25 nm or less from the surface of the membrane.

4. The anion exchange membrane according to any one of claims 1 to 3, wherein the tertiary amino group is a dimethylamino group.

5. A method for producing an anion exchange membrane having a tertiary amino group and a quaternary ammonium group as functional groups, wherein an intensity ratio of the tertiary amino group to the quaternary ammonium group is 1.0 or more as measured by X-ray photoelectron spectroscopy on a surface of the anion exchange membrane having the tertiary amino group and the quaternary ammonium group as the functional groups, the method comprising:
(I) introducing a polymerizable composition for a raw film for ion exchange group introduction into a backing material;
(II) heating the backing material to polymerize the polymerizable composition, thereby producing the raw film for ion exchange group introduction;
(III) introducing the tertiary amino group into the raw film for ion exchange group introduction;
(IV) treating the raw film for ion exchange group introduction into which the tertiary amino group has been introduced with an alkaline aqueous solution at 50°C to 70°C; and
(V) introducing the quaternary ammonium group into the raw film for ion exchange group introduction treated with the alkaline aqueous solution.

6. The method for producing an anion exchange membrane according to claim 5, wherein the alkaline aqueous solution in (IV) has a pH of 10 to 14 at 25°C.

7. The method for producing an anion exchange membrane according to claim 5 or 6, wherein the raw film is treated with the alkaline aqueous solution for 4 to 24 hours in (IV).
